(19) Europäisches Patentamt
European Patent Office
Office européen des brevets

(11) **EP 3 353 013 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **16770285.1**

(22) Anmeldetag: **23.09.2016**

(51) Int Cl.:
***B60Q 1/14*** *(2006.01)*

(86) Internationale Anmeldenummer:
**PCT/EP2016/072725**

(87) Internationale Veröffentlichungsnummer:
**WO 2017/050986 (30.03.2017 Gazette 2017/13)**

(54) **PROJIZIEREN EINES VORGEBBAREN LICHTMUSTERS**

PROJECTION OF A PRE-DEFINABLE LIGHT PATTERN

PROJECTION D'UN MOTIF LUMINEUX POUVANT ÊTRE PRÉDÉFINI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2015 DE 102015012416**

(43) Veröffentlichungstag der Anmeldung:
**01.08.2018 Patentblatt 2018/31**

(73) Patentinhaber: **Audi AG**
**85045 Ingolstadt (DE)**

(72) Erfinder:
• **VARGAS RIVERO, Jose Roberto**
**86161 Augsburg (DE)**
• **GUT, Carsten**
**88662 Überlingen (DE)**
• **REIM, Johannes**
**85072 Eichstätt (DE)**

(56) Entgegenhaltungen:
| | |
|---|---|
| **EP-A1- 2 532 950** | **EP-A2- 1 916 153** |
| **EP-A2- 2 101 107** | **WO-A1-2014/167394** |
| **WO-A1-2015/022115** | **WO-A1-2015/118890** |
| **DE-A1-102006 050 548** | **DE-A1-102014 000 935** |
| **US-A1- 2015 163 470** | |

**Beschreibung**

Die vorliegende Erfindung betrifft ein Verfahren zum Projizieren eines vorgebbaren Lichtmusters mittels einer Beleuchtungsvorrichtung eines Fahrzeugs in eine Umgebung des Fahrzeugs. Darüber hinaus betrifft die vorliegende Erfindung eine Beleuchtungsvorrichtung für ein Fahrzeug mit einer Leuchteinheit und einer Steuereinrichtung zum Steuern der Leuchteinheit. Ferner betrifft die vorliegende Erfindung ein Kraftfahrzeug mit einer solchen Beleuchtungsvorrichtung.

Bislang sind Fahrzeuge und insbesondere Kraftfahrzeuge mit Abblendlicht bekannt, das meist eine nahezu statische Lichtverteilung besitzt. Des Weiteren wird das Abblendlicht in der Regel durch eine einzige Lichtquelle gebildet, aber es sind auch Pixelscheinwerfer bekannt. Die Einstellung des Abblendlichts hängt vom Fahrer oder von fahrzeuginternen Informationen ab. Eine Interaktion mit der Umwelt findet kaum statt.

Nachteilig an der bekannten Steuerung des Abblendlichts ist, dass das Potenzial des Abblendlichts beispielsweise nicht genutzt wird, um mit der Umwelt zu kommunizieren oder den Fahrer durch gezieltes Anpassen der Lichtverteilung in seiner Seh- und Wahrnehmungsaufgabe vermehrt zu unterstützen.

Aus der US 2015/0163470 A1 ist eine Vorrichtung mit einem DMD (Digital Mirror Device) bekannt. Die Vorrichtung zeigt ein Symbol in einem beleuchteten Bereich auf einer Straßenoberfläche an, indem der Kontrast des von einer Lichtquelle erzeugten Lichts für einen Scheinwerfer gesteuert wird. Eine Form des durch die DMD angezeigten Symbole werden so steuert, dass die Form des Symbols bei Betrachtung von der Augenposition des Fahrers durch Verwenden einer Differenz zwischen einer Reflexionsposition eines reflektierten Lichts durch die nicht verzerrt wird.

Aus der Druckschrift EP 1 916 153 A2 ist ein Verfahren zur Informationsdarstellung bekannt, bei welchem ein Projektionsobjekt an einer Projektionsstelle außerhalb eines Kraftfahrzeugs mittels an dem Kraftfahrzeug vorgesehener Projektionsmittel erzeugt wird. Durch ein erzeugtes Projektionsobjekt wird ein voraussichtlicher zukünftiger Aufenthaltsort des Kraftfahrzeugs flächig markiert.

Darüber hinaus offenbart die Druckschrift DE 10 2006 050 548 A1 ein Verfahren zur Warnung anderer Verkehrsteilnehmer. Mittels eines Projektionsmittels wird ein Projektionsobjekt als Warnhinweis für einen anderen Verkehrsteilnehmer an einer Projektionsstelle außerhalb des Kraftfahrzeugs erzeugt. Ein Blickwinkel eines jeweiligen Betrachters wird berücksichtigt, um ein unverzerrtes Bild zu erzeugen.

Die DE 10 2014 000935 A1 offenbart ein Verfahren und eine Anordnung mit einem oder mehreren Digitalprojektoren zur echtzeitfähigen dreidimensionalen Beleuchtung der Fahrbahn vor dem Fahrzeug in Kombination mit einem Kamerasystem zur echtzeitfähigen virtuellen 3D-Rekonstruktion der Verkehrsszene und einem Informationsverarbeitungsmittel, das zur Bilderfassung, Bildverarbeitung, Objekterkennung, Grafikerzeugung, Grafikverarbeitung und Ansteuerung der Projektoren dient. Durch die DE 10 2014 000935 A1 werden gewünschte Oberflächen vor dem Fahrzeug, insbesondere die Fahrbahn, derart beleuchtet, dass ein Fahrbahnlichtdisplay mit variablem grafischem Inhalt gebildet wird. Dieses passt sich dynamisch an die Verkehrs-, Fahr- und Umweltsituation, sowie den Bedürfnissen des Fahrers an. Ein weiteres optionales Kamerasystem zur Erfassung der Kopfposition, Blickrichtung und Blickweite des Fahrers wird zur Steuerung der räumlichen Helligkeitsanpassung oder zur Steuerung von projizierten grafischen Objekten verwendet.

Die WO2015/118.890 offenbart eine Scheinwerfersteuervorrichtung für ein Fahrzeug zum Steuern eines Scheinwerfers des Fahrzeugs.

Die WO 2014/167394 A1 offenbart eine Anzeigeeinheit zum Bereitstellen von Informationen.

Die WO 2015/022115 A1 offenbart ein Verfahren zum Steuern einer Scheinwerferanordnung für ein Fahrzeug.

Die Aufgabe der vorliegenden Erfindung besteht somit darin, ein Verfahren bereitzustellen, mit dem eine Beleuchtungsvorrichtung eines Fahrzeugs flexibler im Hinblick auf die Umgebung des Fahrzeugs gesteuert werden kann.

Erfindungsgemäß wird diese Aufgabe gelöst, durch ein Verfahren nach Anspruch 1.

Darüber hinaus wird erfindungsgemäß bereitgestellt eine Beleuchtungsvorrichtung nach Anspruch 6.

In vorteilhafter Weise wird also ein vorgebbares Lichtmuster in die Umgebung des Fahrzeugs projiziert. Dieses Lichtmuster kann rein zur Informationsdarstellung dienen oder Teile der Umgebung zur besseren Wahrnehmung durch einen Betrachter, insbesondere den Fahrer, spezifisch beleuchten. Bei dem Projizieren wird explizit die Perspektive eines vorbestimmten Beobachters berücksichtigt. Hierzu wird die Projektionsfläche (z.B. Projektionsebene) in der Umgebung des Fahrzeugs ermittelt, auf die das Lichtmuster projiziert wird. Außerdem wird für die Perspektive eine Position des vorbestimmten bzw. potenziellen Beobachters beispielsweise mittels Sensorik ermittelt oder beispielsweise mittels bereits abgespeicherter Daten bereitgestellt. In Abhängigkeit von der ermittelten Projektionsfläche und der ermittelten bzw. bereitgestellten Position des vorbestimmten Beobachters, die zusammen die Beobachtungsperspektive repräsentieren, erfolgt ein pixelweises Steuern einer Leuchteinheit (z. B. eines Pixelscheinwerfers) der Beleuchtungseinheit, um das vorgebbaren Lichtmuster auf der Projektionsfläche zu erzeugen. Damit wird also bei der Erzeugung des Lichtmusters die konkrete Perspektive bzw. stellvertretend die Projektionsfläche bzw. -ebene und die Position des Beobachters, berücksichtigt. Dadurch kann eine Information für den Beobachter leichter lesbar oder eine Beleuchtung individueller erfolgen.

Gemäß der Erfindung weist die Beleuchtungsvorrichtung als Leuchteinheit mehrere Scheinwerfer auf, und werden bei dem pixelweisen Steuern der Beleuchtungsvorrichtung die Scheinwerfer so angesteuert , dass sich das vorgebbare Lichtmuster auf der Projektionsfläche ergibt. Hiermit lassen sich also mehrere Scheinwerfer für die Erzeugung des Lichtmusters nutzen, was die Variabilität oder die Auflösung des Lichtmusters verbessern lässt.

Es werden für die Projektion des vorgebbaren Lichtmusters ein linker Schweinwerfer und ein rechter Scheinwerfer der mehreren Scheinwerfer verwendet , wobei der linke Schweinwerfer und der rechter Scheinwerfer jeweils aus unterschiedlichen Positionen das vorgebbare Lichtmuster erzeugen, wozu entsprechende Ansteuersignale für den linken Schweinwerfer und den rechten Scheinwerfer ermittelt werden.

Beispielsweise handelt es sich bei dem vorbestimmten Beobachter um einen Fahrer oder Beifahrer des Fahrzeugs oder um einen Passanten an einer vorbestimmten Position außerhalb des Fahrzeugs oder eine Person in einem vorbeifahrenden Fahrzeug. Bei all diesen Beobachtern, für die das Lichtmuster bestimmt sein kann, kann die Kopfposition, die ja für die tatsächliche Perspektive von Bedeutung ist, ziemlich exakt und einfach aus Sensordaten des Fahrzeuginnenraums oder der Fahrzeugumgebung gewonnen werden.

Bei der Ermittlung der Projektionsfläche kann eine Positionsänderung des Fahrzeugs oder eines Objekts in der Umgebung des Fahrzeugs berücksichtigt werden. Dadurch lässt sich das Verfahren dynamisch aktualisieren. Hierbei kann beispielsweise eine Trajektorie des Fahrzeugs oder des Objekts benutzt werden.

Des Weiteren kann bei dem Ermitteln der Projektionsfläche eine Topographie vor dem Fahrzeug analysiert werden. Beispielsweise wird das Umfeld vor dem Fahrzeug sensorisch aufgenommen, und aus den Daten wird eine geeignete Projektionsebene bzw. -fläche extrahiert.

Bei einer weiteren Ausgestaltung kann für das pixelweise Steuern der Leuchteinheit der Beleuchtungsvorrichtung eine Eigenschaft der Umgebung berücksichtigt werden. Bei einer solchen Eigenschaft kann es sich beispielsweise um die Beschaffenheit einer Projektionsfläche wie beispielsweise Reflexionsgrad oder Granularität der Oberfläche handeln. Außerdem kann eine Eigenschaft der Umgebung eine aktuelle Verkehrsdichte, die Art einer Straße, ein Point-Of-Interest, die Feuchtigkeit der Fahrspur oder die Umgebungshelligkeit sein. Durch eine solche Eigenschaft kann die Projektion des Lichtmusters weiter individualisiert werden, so dass es für den Beobachter noch mehr Nutzen bringt.

Vorteilhafterweise wird bei dem pixelweisen Steuern der Leuchteinheit der Beleuchtungsvorrichtung ein vorausfahrendes oder entgegenkommendes

Fahrzeug, aktuelle Fahrzeugdaten, eine Information des oder über den Fahrer, ein Abstand des Lichtmusters von dem Fahrzeug oder dergleichen berücksichtigt. Auch durch diese Parameter lässt sich das Lichtmuster vorteilhaft beeinflussen.

Die erfindungsgemäße Beleuchtungsvorrichtung lässt sich durch die oben beschriebenen Verfahrensmerkmale funktionell weiterbilden. Darüber hinaus kann ein Fahrzeug mit dieser Beleuchtungsvorrichtung ausgestattet sein.

Die vorliegende Erfindung wird nun anhand der beigefügten Zeichnungen näher erläutert, in denen zeigen:

Fig. 1      ein Lochkameramodell;
Fig. 2      die Geometrie für die Berechnung der Koordinaten in einer Seitenansicht und in einer Draufsicht;
Fig. 3      Ansichten zur Ermittlung einer Perspektive;
Fig. 4      ein Diagramm zur Methodenauswahl;
Fig. 5      eine Projektion in der Seitenansicht;
Fig. 6      die Projektion von Fig. 5 in der Frontansicht;
Fig. 7      einzelne Projektionsschritte;
Fig. 8      einen Lichtteppich für ein Fahrzeug;
Fig. 9      den jeweiligen Lichtteppich aus der Perspektive der Scheinwerfer;
Fig. 10     eine Lichtverteilung mit zwei Scheinwerfern; und
Fig. 11     ein Diagramm zur Berechnung der Pixelintensität.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in der geschilderten Kombination, sondern auch in Alleinstellung oder in anderen technisch sinnvollen Kombinationen realisiert werden können.

Die Erfindung geht von dem Ansatz aus, dass ein Abblendlicht hoch aufgelöst sein soll und beispielsweise durch einen Pixelscheinwerfer realisiert werden kann. Damit lassen sich beispielsweise perspektivische, an die Umwelt angepasste Darstellungen ermöglichen. Außerdem können Interaktionen mit der Umwelt erfolgen. Ferner kann die Straßentopologie und der Abstand zu anderen Fahrzeugen berücksichtigt werden, um eine situationsabhängige Ansteuerung der Beleuchtungsvorrichtung insbesondere eines Fahrzeugs zu erreichen. Kerngedanke dabei ist, dass die konkrete Perspektive ermittelt wird, indem die Position des Beobachters aber auch die aktuelle konkrete Projektionsebene bzw. -fläche in der Umgebung des Fahrzeug für die pixelweise Steuerung der Leuchteinheit einer Beleuchtungsvorrichtung berücksichtigt werden.

Für eine konkrete Darstellung einer hochaufgelösten Lichtverteilung im Abblendlicht können mehrere Parameter bestimmt und in Form eines jeweiligen Sensorsignals bereitgestellt werden. Derartige in Frage kommenden Parameter werden im Folgenden aufgezählt, ohne eine abschließende Liste darzustellen:

a) Ein erster Parameter für die Steuerung der Leuchteinheit der Beleuchtungsvorrichtung kann eine Lageänderung des eigenen Fahrzeugs bzw. Ego-Fahrzeugs sein. Dieser Parameter ist wichtig, damit die gewünschte Lichtverteilung immer im gleichen horizontalen und vertikalen Abstand projiziert wird. Beispielsweise kann über Beschleunigungssensoren eine Nick-, Roll-, und Wankbewegung detektiert werden. Aus diesem Parameter kann die Augen-/Kopfposition $X_f$, $Y_f$, $Z_f$... aktualisiert sowie die Blickrichtung entsprechend einem Vektor $r$ bestimmt werden. Zusätzlich ist es möglich, die Koordinaten $X_{s1}$, $Y_{s1}$, $Z_{s1}$... sowie den Blickrichtungsvektor $S_1$... für jeden Scheinwerfer zu bestimmen.

b) Ein zweiter Parameter wäre die Positionsänderung von Objekten wie beispielsweise den Fahrspurmarkierungen. Die Bedeutung dieses Parameters liegt darin, dass die Objekte Referenzen sind, an denen sich eine Lichtverteilung orientieren kann. Die Topographie $T_s$ kann aus diesem Parameter mitbestimmt werden.

c) Ein dritter Parameter wäre die Topographie in erster Linie vor dem Fahrzeug. Dazu zählt auch die Erkennung von anderen Projektionsflächen außer der Straße, wie z. B. eine Garagenwand. Die vertikale und horizontale Größe $v$, $h$ der Lichtverteilung kann hieraus mitbestimmt werden. Die genaue Kenntnis über die Geometrie der Projektionsfläche ist zur Berechnung eines korrekten, entzerrten Lichtbilds notwendig. Die Topographie $T_s$ kann aus diesem Parameter ebenfalls mitbestimmt werden.

d) Ein wichtiger Parameter ist auch die Beschaffenheit der Projektionsfläche. Dazu zählt der Reflexionsgrad und die Reflexionseigenschaften sowie die Granularität der Oberfläche. Aufgrund der Reflexionseigenschaften lässt sich die benötigte Lichtstärke und die Abbildungsqualität bestimmen. Die Sichtbarkeit $S_s$, die Reflektivität $R_s$ und die Leuchtdichte $L_s$ der Projektionsfläche kann aus diesem Parameter bestimmt werden.

e) Gemäß einem weiteren Parameter kann festgelegt werden, ob die Lichtfunktion aus der Perspektive eines Fahrzeugführers, des Beifahrers, eines Passanten oder einer Person in einem anderen Fahrzeug zu sehen sein soll. Dementsprechend muss die Entzerrung berechnet werden. Der Blickrichtungsvektor $r$ von einem oder mehreren Beobachtern kann daraus mitbestimmt werden.

f) In diesem Parameter kann die Kopfposition des Fahrzeugführers (des eigenen Fahrzeugs oder des Fremdfahrzeugs) oder die Position der Passanten, aber auch gegebenenfalls deren Trajektorie hinterlegt werden. Die unter dem Parameter e) genannte perspektivische Verzerrung kann hierdurch exakter berechnet werden. Der Parameter $h_p$ (Beobachterkopfhöhe), $\beta$ (Blickrichtung in Bezug auf die Straße), $a$ (laterale Blickrichtung), $b$ (Abstand zwischen Beobachterkopf und Bildebene) kann gemäß den Punkten e) und f) berechnet werden. Aus der Augen- und Kopfposition von einem oder mehreren Beobachtern: $X_f$, $Y_f$, $Z_f$. Zusätzlich kann der Blickrichtungsvektor $r$ von ein oder mehreren Beobachtern daraus mitbestimmt werden. Die Geschwindigkeit $V_f$ von einem oder mehreren Beobachtern kann daraus bestimmt werden.

g) Ein weiterer Parameter kann die aktuelle Verkehrsdichte angeben. Aus diesem Parameter ergibt sich, welcher Projektionsabstand zu wählen ist. Bei hoher Verkehrsdichte wird der Projektionsabstand verkürzt und bei niedriger Verkehrsdichte (z. B. auf Landstraße) kann die Projektionsentfernung erhöht werden. Die vertikale und horizontale Größe $v$, $h$ der Lichtverteilung kann hieraus mitbestimmt werden. Die Sichtbarkeit $S_s$ einer Lichtfunktion kann aus diesem Parameter ebenfalls bestimmt werden. Ebenso lässt sich eine Entscheidung, welche Funktion $F$ dargestellt werden soll, hieraus ableiten.

h) ein weiterer Parameter betrifft die Art einer Straße sowie gegebenenfalls diesbezügliche "Points-Of-Interest" (urbane Umgebung, Autobahn, Landstraße, Baustelle, Unfall etc.). In Abhängigkeit von diesem Parameter kann eine Aktivierung der gewünschten Lichtfunktion erfolgen. Ebenso lässt sich eine Entscheidung, welche Funktion $F$ dargestellt werden soll, hieraus ableiten.

i) Ein weiterer Parameter kann die Feuchtigkeit der Fahrspur betreffen. In Abhängigkeit davon kann eine Aktivierung der gewünschten Lichtfunktion bzw. eine Berücksichtigung in der Ausleuchtung erfolgen. Die Sichtbarkeit $S_s$ der Lichtfunktion, die Reflektivität $R_s$ und die Leuchtdichte $L_s$ der Projektionsfläche kann aus diesem Parameter mitbestimmt werden. Ferner kann eine Entscheidung, welche Funktion $F$ dargestellt werden soll, hieraus abgeleitet werden.

j) Die Umgebungshelligkeit (Beleuchtung von einem Fahrzeug, Straßenlaternen, Dämmerung, Tageslicht) stellen einen weiteren Parameter dar. Mit ihm kann eine Anpassung der Lichtstärke und eine Aktivierung einer gewünschten Lichtfunktion erfolgen. Die Leuchtdichte der Umgebungshelligkeit $L_f$ kann daraus bestimmt werden.

k) Ein Parameter kann der Abstand und/oder die Koordinaten zu einem vorausfahrenden oder entgegenkommenden Fahrzeug und die Fahrzeug-Topologie sein. Mit diesem Parameter kann eine exakte Einblendung eines Fahrzeugs erfolgen. Zusätzlich können aber auch bei Bekanntsein der Fahrzeug-Topologie auch Informationen oder Symbole auf ein Fremd-Fahrzeug projiziert werden. Die vertikale und horizontale Größe v, h der Lichtverteilung kann hieraus mitbestimmt werden. Beispielsweise kann die Größe der Logoprojektion auf ein Fahrzeug davon abhängig gemacht werden. Auch die Topographie $T_s$ kann aus diesem Parameter mitbestimmt werden.

l) Ein weiterer Parameter kann der Nutzerwunsch oder eine Nutzeranforderung sein. Dieser/diese lässt sich über die Betätigung eines Knopfes, Eyetracking, Fahrverhalten, Stimmerkennung, Wohlbefinden und dergleichen erkennen. Somit kann die Aktivierung bzw. Anpassung einer gewünschten Lichtfunktion/Lichtverteilung erfolgen. Ebenso lässt sich eine Entscheidung, welche Funktion F dargestellt werden soll, hieraus ableiten.

m) Auch Fahrzeugdaten wie etwa GPS und Geschwindigkeit können einen wichtigen Parameter darstellen. Hiermit ist eine Aktivierung bzw. Anpassung einer gewünschten Lichtfunktion/Lichtverteilung möglich. Die Geschwindigkeit von dem Fahrzeuginsassen $V_v$ kann daraus mitbestimmt werden. Außerdem lässt sich wiederum eine Entscheidung, welche Funktion F dargestellt werden soll, hieraus ableiten.

n) Einen weiteren Parameter stellt die Innenbeleuchtung dar. Ebenfalls kann mit ihr eine Aktivierung bzw. Anpassung einer gewünschten Lichtfunktion/Lichtverteilung erfolgen. Beispielsweise kann bei aktiviertem Innenraumlicht das Vorfeld des Abblendlichts heller gestaltet werden. Die Leuchtdichte der Innenbeleuchtung $L_f$ kann aus diesem Parameter bestimmt werden.

o) Der Abstand einer gewünschten Projektion zu dem Ego-Fahrzeug ist als weiterer Parameter denkbar. Er kann zur Berechnung der Überlappung von linkem und rechtem Scheinwerfer zur korrekten Darstellung der Lichtverteilung dienen. Auch kann die Topographie $T_s$ aus diesem Parameter mitbestimmt werden.

p) Als weiterer Parameter kann ein Entscheidungsinput dienen, der die Entscheidung des Fahrers repräsentiert, wer ein Beobachter der Lichtfunktion sein soll. Diese Eingabe kann beispielsweise über einen Knopfdruck, eine MMI (Mensch-Maschine-Schnittstelle) oder eine APP erfolgen. Hierdurch kann vom Fahrer selbst entschieden werden, ob z. B. eine Logoprojektion aus seiner Sicht perspektivisch entzerrt werden soll oder aus Sicht eines Passanten. Diese Entscheidung ist dem Funktionsmapping (siehe unten) übergeordnet. Der Entscheidungsparameter E kann hieraus ermittelt werden.

Es können unterschiedliche Lichtfunktionen definiert werden. Diesen Lichtfunktionen ist jeweils eine entsprechende Betrachtungsperspektive zugewiesen. Aus dieser Zuweisung ergibt sich ein sogenanntes "Funktionsmapping". Beispielsweise wird der Funktion "Baustellenlicht" die Fahrerperspektive zugewiesen, da die Beleuchtung einer Baustelle in erster Linie für den Fahrer von Bedeutung ist. Die Funktion "Beleuchtung eines Zebrastreifens" wäre einer Passantenperspektive zuzuordnen, da ein Passant den Zebrastreifen gut erkennen soll. Die Projektion eines Logo kann beispielsweise einer Fahrerperspektive in einer Voreinstellung zugewiesen sein. Gegebenenfalls kann diese Zuweisung durch MMI/APP geändert werden, so dass beispielsweise auch ein Passant das Logo gut sieht.

| Funktionen für Fahrer | Funktionen für Beifahrer | Funktionen für Fremdfahrzeug | Funktionen für Passanten |
|---|---|---|---|
| Baustellenlicht | Begrüßungstext | Überholhinweis | Zebrastreifen |
| | | | Logo |
| ... | | | |

Obige Tabelle zeigt, dass sich die Perspektiven, die sich für das Projizieren eines Lichtmusters von einem Fahrzeug aus ergeben, beispielsweise in vier Bereiche bzw. Kategorien eingeteilt werden können. Es ergeben sich damit Perspektiven bzw. Funktionen für einen Fahrer, einen Beifahrer, ein Fremdfahrzeug oder einen Passanten. Die jeweilige Funktion gewährleistet dann, dass die Projektion aus der entsprechenden Perspektive nicht verzerrt ist. In manchen Situationen kann es allerdings vorkommen, dass die Funktion nicht für die gewünschte Perspektive darstellbar ist. Dann muss entschieden werden, ob die Lichtfunktion bereitgestellt wird oder nicht.

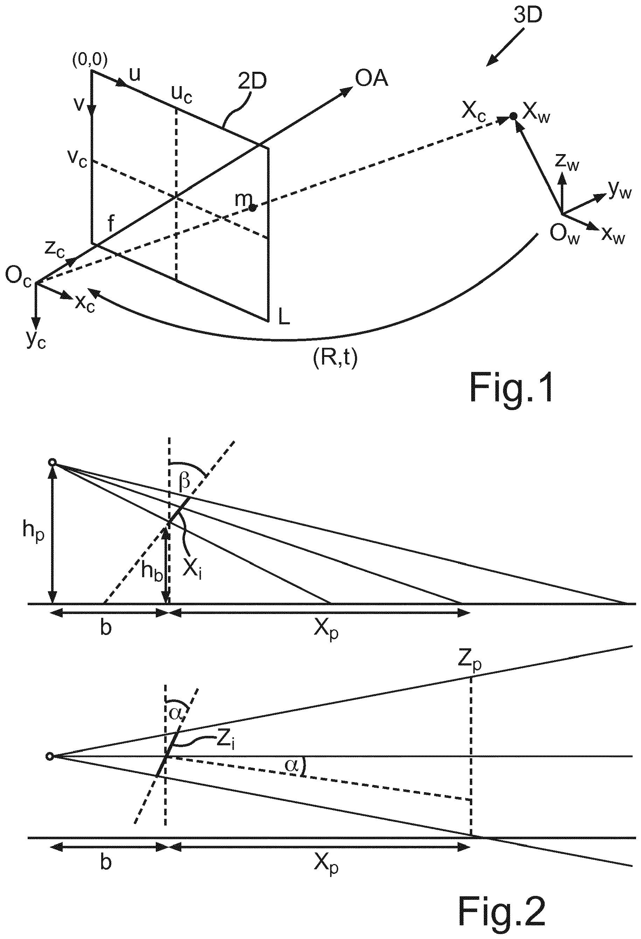

Im Folgenden wird ein beispielhafter Algorithmus zur Berechnung der gewünschten Lichtverteilung als Basis für die Steuerung der Leuchteinheit der Beleuchtungsvorrichtung beschrieben. Das Verfahren basiert auf dem Lochkameramodell mit homogenen Koordinaten, wie es in Fig. 1 dargestellt ist. Ausgangspunkt ist beispielsweise ein Kamerazentrum $O_c$, das im vorliegenden Fall dem optischen Zentrum beispielsweise eines Scheinwerfers entspricht. Mit ihm soll eine 3D-Punktewolke erzeugt werden, von denen jeder Punkt beispielsweise durch einen Wert $x_w$ repräsentiert wird. Ein solcher Punkt befindet sich in der realen Welt in einem Koordinatensystem $O_w$. Es lässt sich eine 2D-Ebene bzw. Bildebene (2D) definieren, durch die jeder Projektionsstrahl von dem Scheinwerferzentrum $O_c$ zu dem 3D-Punkt $x_w$ hindurchtritt und dort einen Punkt m definiert. Dieses Lochkameramodell kann dazu verwendet werden, ein bestimmtes Bild auf der Straße in ein zweidimensionales Bild bezogen auf die Scheinwerferebene umzurechnen.

Die zweidimensionalen Koordinaten können mit den folgenden Gleichungen berechnet werden, wobei u und v zu den Bildebene-Koordinaten gehören und k zu den intrinsischen Kamera-Parametern. Π entspricht dem extrinsischen Kamera-Parameter. Das Straßenbild wird durch eine Punktewolke repräsentiert, wobei die Werte in X, Y und Z gespeichert sind. R und t entspricht einer Drehung bzw. Verschiebung zwischen der Kamera und den Welt-Rahmenkoordinaten.

$$\tilde{m} = [uv1]^T \tag{1}$$

$$\tilde{m} = K\Pi\tilde{X}_w \tag{2}$$

$$\tilde{X}_w = [XYZ1]^T \tag{3}$$

$$K = \begin{bmatrix} k_u f & y & u_0 \\ 0 & k_u f & v_0 \\ 0 & 0 & 1 \end{bmatrix} \tag{4}$$

$$\Pi = [R|t] \tag{5}$$

Die Bildebene-Koordinaten sind (in Winkel umgerechnet) wie folgt gegeben:

$$\alpha_u = \tan^{-1}\left(\frac{u}{f}\right); \alpha_v = \tan^{-1}\left(\frac{v}{f}\right) \tag{6}$$

Die Winkelwerte können für eine beliebige Scheinwerfer-Technologie in Pixelpositionen umgerechnet sowie in einem entsprechenden Bild- oder Videoformat gespeichert werden. Das Verfahren benutzt auch eine trigometrische Annäherung zur Berechnung der zweidimensionalen Koordinaten $X_p$, $Z_p$, wobei jeder Bildpunkt $X_i$, $Z_i$ für eine bestimmte Beobachterkopfposition und Blickrichtung auf die Straße projiziert wird. Dabei wird vorausgesetzt, dass sich die Bildebene senkrecht zur Blickrichtung des Beobachters befindet. In dem vorliegenden Dokument wird die Koordinate X beispielsweise der Fahrzeuglängsrichtung bzw. Fahrtrichtung, die Koordinate Z der Fahrbahn-Querrichtung und die Koordinate Y der Höhenrichtung des Fahrzeugs zugeordnet.

Fig. 2 zeigt nun die Geometrie zur Berechnung der zweidimensionalen Koordinaten $X_p$ und $Z_p$ auf einer Projektionsebene, z. B. einer Straße. Die obere Abbildung in Fig. 2 zeigt die Seitenansicht und die untere Abbildung die Draufsicht.

$h_p$ entspricht der Beobachterkopfhöhe, β der Blickrichtung in Bezug auf die Straße, a der lateralen Blickrichtung, b dem Abstand zwischen Beobachterkopf und Bildebene und $h_b$ repräsentiert den unteren Teil des Bildes und der Straße. Ein Fehler von ungefähr 2,5 % für Winkelwerte (a oder β) bis zu 14° ist zu erwarten. Dieser Fehler wird berechnet aus dem Abstand zwischen den Bildpunkten von dem ursprünglichen Bild und denjenigen, die aus Fahrersicht mit dieser Methode berechnet sind.

Die zweidimensionalen Koordinaten $X_p$ und $Z_p$ auf der Projektionsebene ergeben sich gemäß folgenden Gleichungen:

$$X_p = \frac{b}{\dfrac{h_p}{X_i + h_b} - 1} \tag{7}$$

$$Z_p = Z_i\left(1 + \frac{X_p \cos a}{b}\right) \tag{8}$$

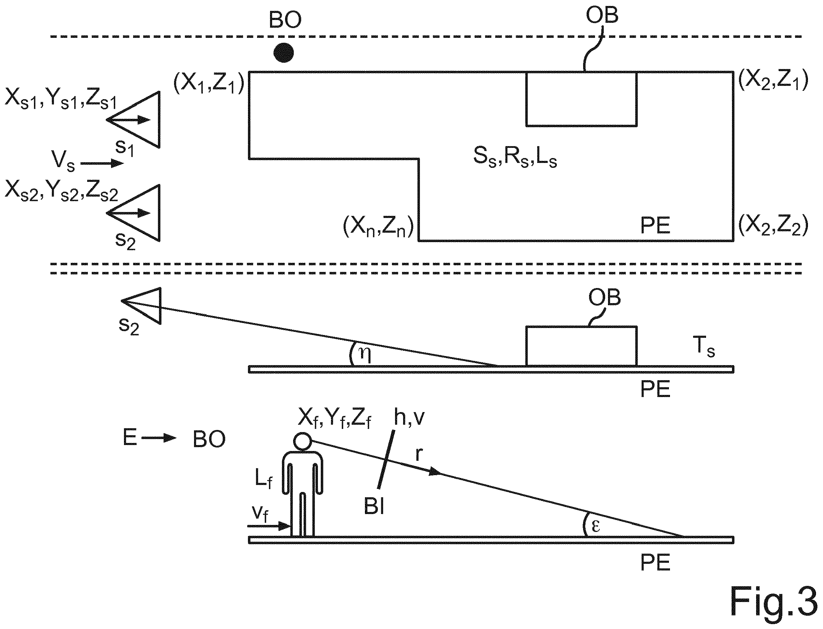

Im Zusammenhang mit Fig. 3 wird nun kurz erläutert, wie aus den oben genannten Parametern bzw. unterschiedlichen Sensordaten Informationen gewonnen werden, um die notwendigen physikalischen bzw. geometrischen Werte zu bestimmen. Falls nicht anders angegeben, sind alle Werte auf einen globalen Bezugspunkt auf der Straße bezogen. So stellt $\varepsilon$ den Winkel zwischen dem/den Beobachter(n) BO von der Mitte der Straßenfläche bzw. Projektionsebene PE dar, worauf das Bild BI projiziert wird. Die Koordinaten jeder Ecke des Abschnitts der Straßenfläche, d.h. der Projektionsebene PE, worauf das Bild BI projiziert wird, lauten: $I_1$, $Z_1 ... X_n$, $Z_n$. In dem Beispiel von Fig. 3 befindet sich auf der Projektionsebene ein zusätzliches Objekt OB. In der Draufsicht ergibt sich dann die Topographie $T_s$ gemäß der obersten Abbildung in Fig. 3. Das Fahrzeug wird durch die beiden Scheinwerfer mit den Blick- bzw. Strahlrichtungsvektoren $S_1$ und $S_2$ symbolisiert. Es bewegt sich mit der Geschwindigkeit $v_s$. Die Topographie $T_s$ für die Umgebung vor dem Fahrzeug ergibt sich im Hinblick auf den Projektionsstrahl in der Seitenansicht gemäß dem mittleren Bild von Fig. 3. Das untere Bild von Fig. 3 zeigt schließlich den Reflexionsstrahl, den der Beobachter BO wahrnimmt. Dieser führt zusammen mit allen anderen Reflexionsstrahlen in einer Bildebene zu einem Bild BI. Aus Projektionsstrahl und Reflexionsstrahl ergibt sich die entsprechende Perspektive des Beobachters BO. Für die Steuerung der Beleuchtungsvorrichtung kann der Beobachter BO einen Entscheidungsparameter E beeinflussen.

Nachdem nun alle Eingangsparameter ermittelt bzw. bereitgestellt sind, kann eine entsprechende geometrische Berechnung erfolgen, mit der die jeweils notwendigen Pixel in einer zweidimensionalen Scheinwerferebene aktiviert werden müssen, um ein bestimmtes Bild für einen bestimmten Beobachter zu generieren. Die Intensität ist in dieser Rechnung noch nicht berücksichtigt, wird aber in einem späteren Schritt eigenständig ermittelt.

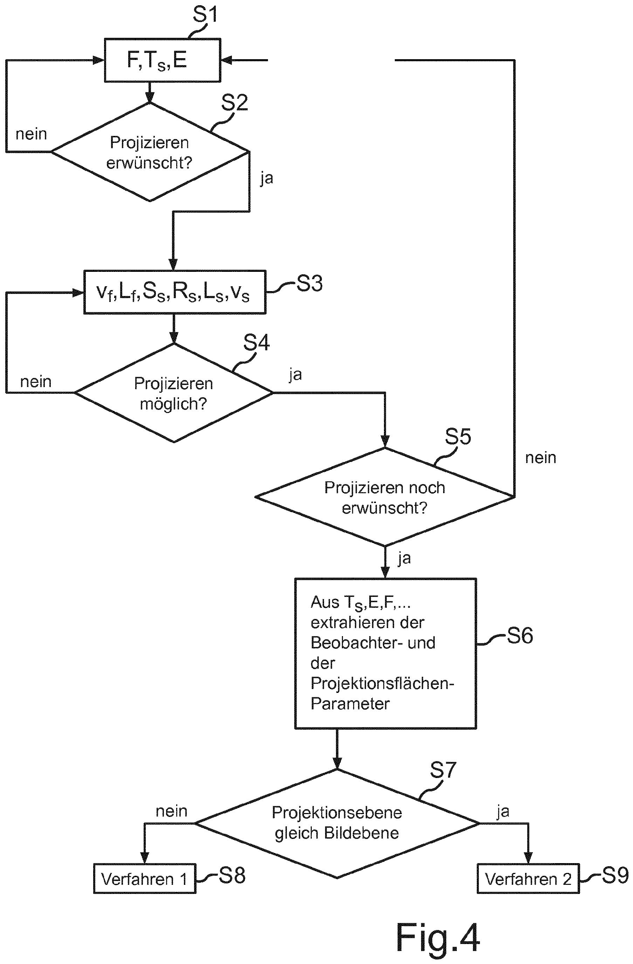

Fig. 4 zeigt einen Workflow für die geometrische Berechnung zu einem bestimmten Zeitpunkt t. In einem ersten Schritt S1 werden Eingangsparameter wie etwa die Funktion F (z. B. Baustellenlicht, Logodarstellung etc.), die Topographie $T_s$ oder der Entscheidungsparameter E (z. B. Fahrer oder Passant als Beobachter) bereitgestellt. In einem nachfolgenden Schritt S2 wird automatisch oder manuell entschieden, ob ein Projizieren erwünscht ist. Unerwünscht ist es beispielsweise wenn die Topographie nicht passt oder ein Auto unmittelbar vorausfährt. Im anschließenden Schritt S3, wenn die Projektion erwünscht ist, werden physikalische Parameter wie $v_f$, $L_f$, $S_s$, $R_s$, $L_s$, $v_s$ oder dergleichen berechnet. Im anschließenden Schritt S4 wird entschieden, ob das Projizieren nach wie vor möglich ist. Beispielsweise ist das Projizieren nicht möglich, wenn die Geschwindigkeit bei ständig wechselnder Projektionsebene zu hoch ist. Falls das Projizieren möglich ist, wird in Schritt S5 abgefragt, ob das Projizieren noch erwünscht ist. Falls nicht, wird zu Schritt S1 zurückgegangen. Falls das Projizieren noch erwünscht ist, werden in Schritt S6 aus den Eingangsparametern von Schritt S1 Beobachterparameter und Projektionsflächenparameter extrahiert. Hierzu zählen die Kopfposition und die Blickrichtung einerseits und die Leuchtdichte andererseits. Anschließend wird überprüft, ob die Projektionsebene gleich der Bildebene ist. Falls dem nicht so ist, wird das nachfolgende Verfahren 1 durchgeführt. Wenn hingegen die Projektionsebene gleich der Bildebene ist und der Beobachter beispielsweise senkrecht auf die Straße blickt, auf die das Bild bzw. Lichtmuster projiziert wird, so wird Verfahren 2 angewandt. Das Verfahren 2 basiert auf dem Lochkameramodell und ist wesentlicher einfacher als das Verfahren 1.

Das Verfahren 1 gliedert sich in folgende Schritte:

1. Schritt: Das Bild wird binarisiert und diejenigen Punkte, die beleuchtet sein sollen, werden extrahiert und als Koordinaten $X_i$, $Z_i$ (Bildebene) gespeichert.

2. Schritt: Basierend auf den Werten von Xf, Yf, Zf, r, $\varepsilon$, $X_1$, $Z_1 ... X_n$, $Z_n$, h, v und den Gleichungen (7) und (8) wird jeder Punkt in $X_i$, $Z_i$ skaliert (d.h. an die Projektionsebene angepasst) und auf die durch die Punkte $X_1$, $Z_1 ... X_n$, $Z_n$ definierte Fläche projiziert und der Topologie $T_s$ angepasst. Wenn $X_i$, $Z_i$ eine binäre Matrix bildet, ist die Anpassung an eine bestimmte Topographie als das Hadamard-Produkt zwischen der Matrix bei $X_i$, $Z_i$ und der Topographie-Matrix $T_s$ definiert (hier nur als binäre Matrix betrachtet). Falls beide Matrizen nicht dieselbe Größe haben, können Interpolationsverfahren benutzt werden.

3. Schritt: Die durch die Punkte $X_1$, $Z_1 ... X_n$, $Z_n$ definierte Fläche wird in Subflächen aufgetrennt. Beispielsweise kann jeder Scheinwerfer, die zusammen die Leuchteinheit einer Beleuchtungsvorrichtung bilden, eine Subfläche beleuchten.

4. Schritt: Basierend auf den Werten von $X_{s1}$, $Y_{s1}$, $Z_{s1}$,...,$S_1$... und den Gleichungen (1) bis (6) sowie der Trennung in Schritt S3 wird eine 2D-Projektion für jeden Scheinwerfer berechnet.

5. Schritt: Basierend auf der Scheinwerfer-Technologie und -geometrie wird jede 2D-Projektion (also die ebene Punkteverteilung) in ein bestimmtes Bild-Format spezifisch für den Scheinwerfer umgerechnet (die Pixelintensität basiert auf der Pixelintensitäts-Rechnung).

6. Schritt: Basierend auf $v_s$ und $v_f$ kann jedes Bild in eine Videosequenz umgewandelt werden.

Basierend auf den Umständen gibt es unterschiedliche Optimierungsmöglichkeiten, um die Latenzzeit zu reduzieren, wie z. B. Integrieren des zweiten bis vierten Schritts in eine einzige Matrixoperation. Außerdem ist es möglich, das ursprüngliche Bild und das durch diese Methode erzeugte Bild zu vergleichen, um ein Qualitätskriterium zu erhalten.

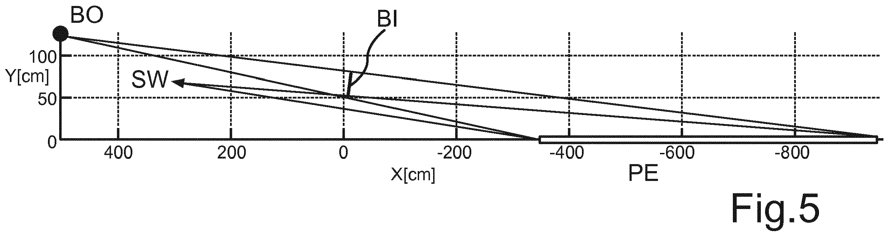

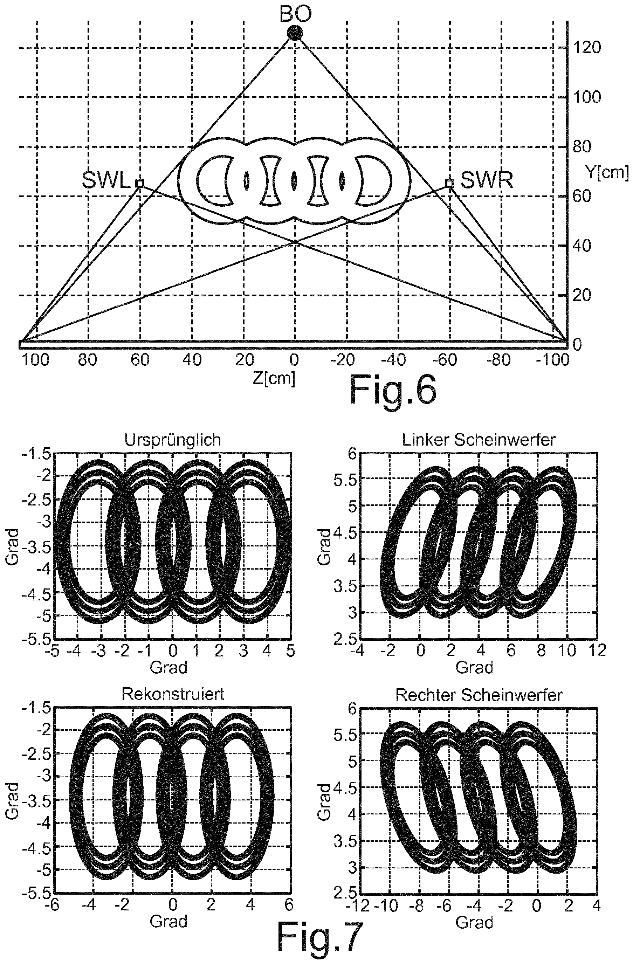

Die Figuren 5 bis 7 zeigen ein Beispiel, bei dem das Audi-Logo für die Fahrerperspektive auf die Straße projiziert wird. Dazu zeigt Fig. 5 die Geometrie in der Seitenansicht. Ein Scheinwerfer SW projiziert ein Lichtmuster auf eine Projektionsebene PE, woraus sich für den Beobachter BO in einer Bildebene ein Bild BI ergibt. Die resultierende Perspektive entspricht hier beispielsweise einer Fahrerperspektive. In der Frontansicht, bei der die Querkoordinate Z horizontal und die Höhenkoordinate Y vertikal aufgetragen ist, ergibt sich die Konstellation von Fig. 6. Der linke Scheinwerfer SWL soll zusammen mit dem rechten Scheinwerfer SWR das unverzerrte Audi-Logo für den Fahrer bzw. Beobachter BO, der zwischen beiden Scheinwerfern positioniert ist, projizieren. Dazu wird ein ursprüngliches bzw. gewünschtes Lichtmuster entsprechend der Abbildung links oben in Fig. 7 vorgegeben. In dieser gewünschten Form ist bereits die Projektionsebene und die Position des Beobachters bzw. Fahrers berücksichtigt. Da aber nun zwei Scheinwerfer in unterschiedlichen Positionen das Lichtmuster erzeugen sollen, müssen entsprechende Bilder bzw. Ansteuersignale entsprechend den Darstellungen auf der rechten Seite von Fig. 7 für den linken Scheinwerfer SWL und den rechten Scheinwerfer SWR ermittelt werden. Zusammen ergibt sich für den Beobachter BO aus seiner Perspektive dann das rekonstruierte Bild aus Fig. 7 links unten.

Das zweite in Fig. 4 angedeutete Verfahren beinhaltet folgende Schritte:

1. Schritt: Wie in Verfahren 1

2. Schritt: Basierend auf den Werten von $X_1$, $Z_1$...$X_n$, $Z_n$, h, v wird jeder Punkt $X_i$, $Z_i$ in der Bildebene skaliert und auf die durch die Punkte $X_1$, $Z_1$...$X_n$, $Z_n$ definierte Fläche sowie an die Topographie $T_s$ angepasst.

3. bis 6. Schritt: Wie in Verfahren 1

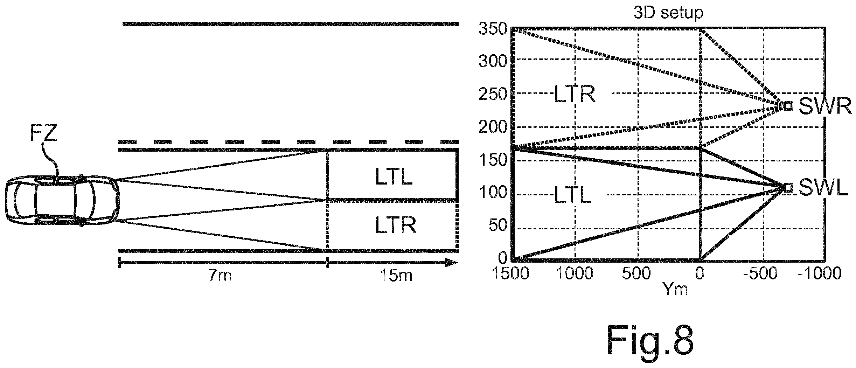

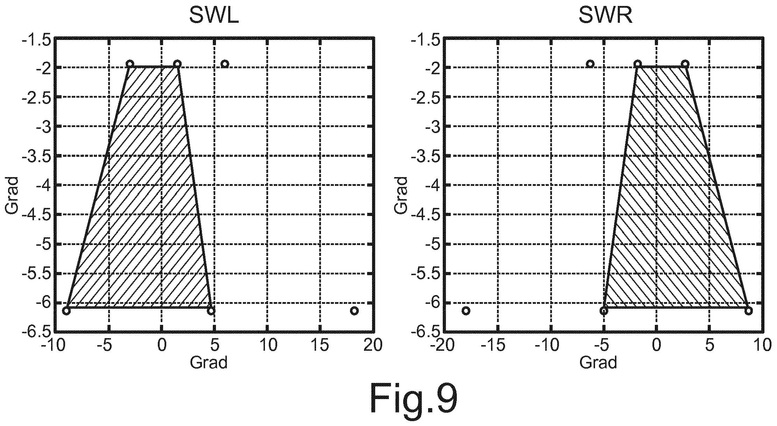

Wie für Verfahren 1 gibt es auch für Verfahren 2 unterschiedliche Optimierungsmöglichkeiten, um die Latenzzeit zu reduzieren. Beispielsweise kann eine Integration der Schritte 2 bis 4 in eine einzige Matrixoperation erfolgen. Die Figuren 8 und 9 zeigen eine mögliche Lichtverteilung für die beiden Scheinwerfer. Fig. 8 zeigt links ein Fahrzeug FZ, das auf einer Fahrbahn einer Straße einen rechteckigen Lichtteppich erzeugen soll. Dabei soll der linke Scheinwerfer einen linken Lichtteppich LTL und der rechte Scheinwerfer einen rechten Lichtteppich LTR erzeugen. Das Bild in Fig. 8 rechts zeigt in gespiegelter Ansicht die Strahlenverläufe für die Ecken der Leuchtteppiche LTL und LTR bezogen auf die beiden Scheinwerfer SWL und SWR.

Fig. 9 gibt das 2D-Bild jedes der Scheinwerfer SWL und SWR auf der jeweiligen Scheinwerferebene wieder. Dies bedeutet, dass in jedem der Scheinwerfer diejenigen Pixel leuchten müssen, die in dem jeweils markierten Bereich liegen. Zusammen mit der Scheinwerfergeometrie und -optik sowie der gewählten Projektionsebene ergibt sich dann der Lichtteppich mit den beiden Teilen LTL und LTR.

Im Folgenden soll erläutert werden, wie die Pixelintensität zu berechnen ist. Basierend auf den Werten $L_f$, $S_s$, $R_s$, $L_s$, $T_s$ sowie den Parametern von Beobachter und Projektionsebene bzw. Straßenfläche, den Vorgaben der Straßenverkehrsordnung, der Geometrie der Scheinwerfer und deren Technologie, der Anzahl der Scheinwerfer und der 2D-Projektionen, die mit den Verfahren 1 und 2 gerechnet werden, kann diejenige Intensität pro Pixel berechnet werden, die benötigt wird, um eine gewünschte Lichtverteilung auf der Straße zu erzeugen.

Im Folgenden sollen beispielhaft die Überlappungsbereiche für zwei oder mehr Scheinwerfer bestimmt werden. Die gewünschte Lichtverteilung $\hat{x}$ kann aus der Summe aller überlappenden Bilder $y^k$ multipliziert mit dem Faktor $A^k$ für alle überlappenden Scheinwerfer K berechnet werden entsprechend der Formel:

$$\hat{x} = \sum_{k=1}^{K} A^k y^k \ (9) \tag{9}$$

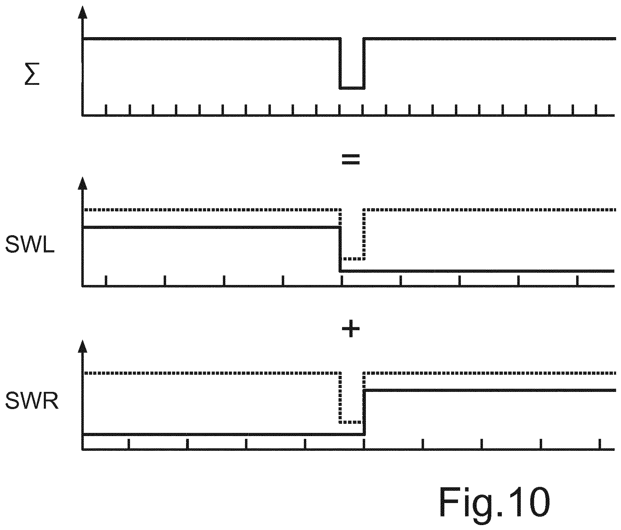

Fig. 10 zeigt oben die gewünschte Lichtverteilung in Summe. Diese setzt sich aus der Lichtverteilung des linken Scheinwerfers SWL addiert mit der Lichtverteilung des rechten Scheinwerfers SWR zusammen.

Die Überlappung von mehreren Scheinwerferbildern kann zum einen die Intensität erhöhen, aber es kann auch die Auflösung verbessert werden.

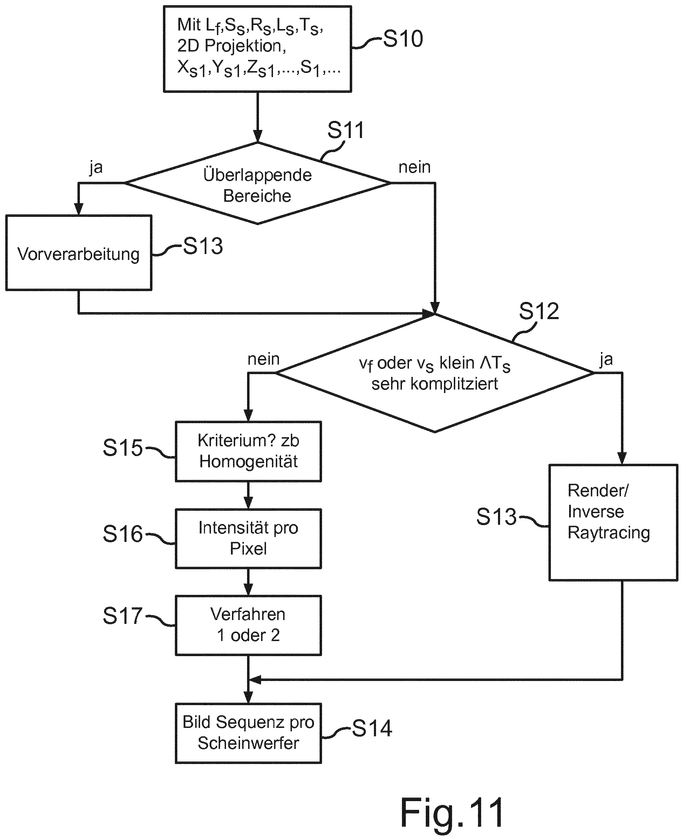

Fig. 11 zeigt ein Workflow-Diagramm zur Berechnung der Pixelintensität. In Schritt S10 werden alle physikalischen und geometrischen Eingangsparameter für die Intensitätsberechnung bereitgestellt. Im anschließenden Schritt S11 wird überprüft, ob überlappende Bereiche vorhanden sind. Wenn nicht, erfolgt ein Sprung zu Schritt S12. Wenn jedoch überlappende Bereiche vorhanden sind, erfolgt ein Sprung zu Schritt S13, in dem eine Vorverarbeitung der Daten beispielsweise hinsichtlich einer erhöhten Auflösung oder spezieller Effekte erfolgt. Anschließend wird ebenfalls zu Schritt S12 gesprungen. In Schritt S12 wird überprüft, ob die interessierenden Geschwindigkeiten klein und die betroffene Topographie $T_s$ sehr komplex ist. Falls diese UND-Bedingung erfüllt ist, kann eine zeitintensive Berechnung in Schritt S13 durchgeführt werden. Dabei kann beispielsweise eine 3D-Bildverarbeitung mit sogenanntem "Render" bzw. "Inverse Rateracing" erfolgen. Anschließend wird in Schritt S14 eine Bildsequenz pro Scheinwerfer erzeugt.

Falls jedoch die UND-Bedingung von Schritt S12 nicht erfüllt ist und beispielsweise eine der Geschwindigkeiten groß ist, wird in Schritt S15 ein vorgegebenes Kriterium, z. B. die Homogenität oder ein gewünschter Intensitätsverlauf überprüft. Anschließend wird in Schritt S16 die Intensität pro Pixel ermittelt. Sodann wird in Schritt S17 eines der Verfahren 1 oder 2 zur Berechnung der Projektionsgeometrie bzw. der Pixelpositionen durchgeführt. Anschließend erfolgt hier ebenfalls ein Sprung zu Schritt S14.

In vorteilhafter Weise bieten Lichtfunktionen, wie sie nach den beschriebenen Schemen gebildet werden können, gegenüber anderen Fahrerassistenzsystemen wie Head-Up-Displays die Möglichkeit, die Sichtbarkeit von Objekten in der Umwelt tatsächlich zu verbessern oder zu verschlechtern. Zudem können Lichtassistenz-Funktionen beim zukünftigen pilotierten Fahren dazu beitragen, mit der Umwelt zu kommunizieren und zu interagieren. Durch die Anpassung des Abblendlichts an die oben genannten Parameter kann der Fahrer in seiner Seh- und Wahrnehmungsaufgabe unterstützt werden. Bei einer konkreten technischen Umsetzung kann eine spezialisierte GPU (Graphic Processor Unit) mit einem Scheinwerfer, einem Steuergerät (auf dem das oben genannte Verfahren implementiert ist) und einer Sensorik für die benötigten Sensordaten verbunden sein. Dabei kann eine Umsetzung in einer Architektur und Programmiersprache erfolgen, die für eine normale Latenzzeit optimiert ist.

Beim Scheinwerfer ist es von Vorteil, wenn es sich um einen hochauflösenden Scheinwerfer handelt, z. B. auf der Basis von DMD (Digital Micro Device) oder Scanner mit mindestens 100 Pixel. Bei der Entwicklung zukünftiger Lichtfunktionen sind diese so zu wählen, dass sie den Fahrer unterbewusst unterstützen, ohne ihn abzulenken. Lichtfunktionen im Abblendlicht sind bei nasser Fahrbahn, zu heller Fremdbeleuchtung sowie einem vorausfahrenden Fahrzeug nicht sichtbar und müssen dementsprechend situationsbezogen eingesetzt werden.

## Patentansprüche

1. Verfahren zum Projizieren eines vorgebbaren Lichtmusters mittels einer Beleuchtungsvorrichtung eines Fahrzeugs (FZ) in eine Umgebung des Fahrzeugs durch

   - Ermitteln einer Projektionsfläche (PE) in der Umgebung des Fahrzeugs (PZ) für eine Perspektive eines vorbestimmten Beobachters (BO),
   - Ermitteln oder Bereitstellen einer Position des vorbestimmten Beobachters (BO) für die Perspektive,
   - pixelweises Steuern einer Leuchteinheit (SW) der Beleuchtungsvorrichtung in Abhängigkeit von der ermittelten Projektionsfläche (PE) und der ermittelten Position des vorbestimmten Beobachters (BO) zum Erzeugen des vorgebbare Lichtmusters, wobei

      o bei dem Ermitteln der Projektionsfläche (PE) eine Positionsänderung des Fahrzeugs (FZ) oder eines Objekts (OB) in der Umgebung des Fahrzeugs berücksichtigt wird, oder
      o bei dem Ermitteln oder Bereitstellen einer Position eines vorbestimmten Beobachters (BO) dessen Trajektorie berücksichtigt wird, und wobei

   - die Beleuchtungsvorrichtung als Leuchteinheit (SW) mehrere Scheinwerfer aufweist, und bei dem pixelweisen Steuern der Beleuchtungsvorrichtung die Scheinwerfer so angesteuert werden, dass sich das vorgebbare Lichtmuster auf der Projektionsfläche ergibt, wobei

- für die Projektion des vorgebbaren Lichtmusters ein linker Schweinwerfer (SWL) und ein rechter Scheinwerfer (SWR) der mehreren Scheinwerfer verwendet wird, wobei der linke Schweinwerfer (SWL) und der rechter Scheinwerfer (SWR) jeweils aus unterschiedlichen Positionen das vorgebbare Lichtmuster erzeugen, wozu entsprechende Ansteuersignale für den linken Schweinwerfer (SWL) und den rechten Scheinwerfer (SWR) ermittelt werden.

2. Verfahren nach Anspruch 1, wobei der vorbestimmte Beobachter (BO) ein Fahrer oder Beifahrer des Fahrzeugs oder ein Passant an einer vorbestimmten Position außerhalb des Fahrzeugs (FZ) oder eine Person in einem vorbeifahrenden Fahrzeug ist.

3. Verfahren nach einem der vorhergehenden Ansprüche, wobei bei dem Ermitteln der Projektionsfläche (PE) eine Topografie ($T_s$)vor dem Fahrzeug analysiert wird.

4. Verfahren nach einem der vorhergehenden Ansprüche, wobei bei dem pixelweisen Steuern der Leuchteinheit (SW) der Beleuchtungsvorrichtung eine Eigenschaft der Umgebung berücksichtigt wird.

5. Verfahren nach einem der vorhergehenden Ansprüche, wobei bei dem pixelweisen Steuern der Leuchteinheit (SW) der Beleuchtungsvorrichtung ein vorausfahrendes oder entgegenkommendes Fahrzeug, aktuelle Fahrzeugdaten, eine Information des oder über den Fahrer oder ein Abstand des Lichtmusters von dem Fahrzeug (FZ) berücksichtigt wird.

6. Beleuchtungsvorrichtung für ein Fahrzeug (FZ) mit

- einer Leuchteinheit (SW),
- einer Recheneinrichtung zum Ermitteln einer Projektionsfläche (PE) in der Umgebung des Fahrzeugs (FZ) für eine Perspektive eines vorbestimmten Beobachters (BO) und zum Ermitteln oder Bereitstellen einer Position des vorbestimmten Beobachters (BO) für die Perspektive und
- einer Steuereinrichtung zum pixelweisen Steuern der Leuchteinheit (SW) in Abhängigkeit von der ermittelten Projektionsfläche (PE) und der ermittelten Position des vorbestimmten Beobachters (BO) zur Erzeugung des vorgebbare Lichtmusters, wobei
- die Recheneinrichtung dazu ausgebildet ist,

   o bei dem Ermitteln der Projektionsfläche (PE) eine Positionsänderung des Fahrzeugs (FZ) oder eines Objekts (OB) in der Umgebung des Fahrzeugs zu berücksichtigen, oder
   o bei dem Ermitteln oder Bereitstellen einer Position eines vorbestimmten Beobachters (BO) dessen Kopfposition und/oder Trajektorie zu berücksichtigen, wobei

- die Beleuchtungsvorrichtung als Leuchteinheit (SW) mehrere Scheinwerfer aufweist, und bei dem pixelweisen Steuern der Beleuchtungsvorrichtung die Scheinwerfer so angesteuert werden, dass sich das vorgebbare Lichtmuster auf der Projektionsfläche ergibt, und wobei
- die Beleuchtungsvorrichtung einen linken Scheinwerfer (SWL) und einen rechten Scheinwerfer (SWR) aus den mehreren Scheinwerfer aufweist, welche für die Projektion des vorgebbaren Lichtmusters verwendbar sind, wobei der linke Schweinwerfer (SWL) und der rechter Scheinwerfer (SWR) jeweils aus unterschiedlichen Positionen das vorgebbare Lichtmuster erzeugen, wozu entsprechende Ansteuersignale für den linken Schweinwerfer (SWL) und den rechten Scheinwerfer (SWR) ermittelt werden.

7. Fahrzeug mit einer Beleuchtungsvorrichtung nach Anspruch 6.

**Claims**

1. Method for projecting a predefinable light pattern using an illuminating device of a vehicle (FZ) into an area surrounding the vehicle, comprising:

   - determining a projection surface (PE) in the area surrounding the vehicle (PZ) for a perspective of a predefined observer (BO);
   - determining or providing a position of the predefined observer (BO) for the perspective;
   - pixel-wise control of a light unit (SW) of the illuminating device based on the determined projection surface (PE) and the determined position of the predefined observer (BO) for producing the predefinable light pattern, wherein:

- when determining the projection surface (PE) a change in position of the vehicle (FZ) or an object (OB) in the area surrounding the vehicle is taken into account or
- when determining or providing a position of a predetermined observer (BO) the trajectory of the latter is taken into account, and wherein
- the illuminating device as light unit (SW) has a plurality of headlights and the headlights are controlled during the pixel-wise control of the illuminating device so that the predefinable light pattern is produced on the projection surface, wherein
- for projecting the predefinable light pattern a left headlight (SWL) and a right headlight (SWR) of the plurality of headlights is used, wherein the left headlight (SWL) and the right headlight (SWR) respectively produce the predefinable light pattern from different positions, for which corresponding control signals are determined for the left headlight (SWL) and the right headlight (SWR).

2. Method according to claim 1, wherein the predefined observer (BO) is a driver or passenger of the vehicle or a pedestrian at a predefined position outside the vehicle (FZ) or a person in a passing vehicle.

3. Method according to any of the preceding claims, wherein on determining the projection surface (PE) a topography ($T_s$) in front of the vehicle is analysed.

4. Method according to any of the preceding claims, wherein a property of the area surrounding the vehicle is taken into account during the pixel-wise control of the light unit (SW) of the illuminating device.

5. Method according to any of the preceding claims, wherein a vehicle driving in front or an oncoming vehicle, current vehicle data, information from or about a driver or a distance of the light pattern from the vehicle (FZ) is taken into account during the pixel-wise control of the light unit (SW) of the illuminating device.

6. Illuminating device for a vehicle (FZ) comprising:

- a light unit (SW),
- a processing unit for determining a projection surface (PE) in the area surrounding the vehicle (FZ) for a perspective of a predefined observer (BO) and for determining or providing a position of the predefined observer (BO) for the perspective and
- a control device for pixel-wise control of the light unit (SW) based on the determined projection surface (PE) and the determined position of the predefined observer (BO) for generating the predefinable light pattern, wherein
- the processing unit is configured:

- when determining the projection surface (PE) to take into account a change in position of the vehicle (FZ) or an object (OB) in the area surrounding the vehicle or
- when determining or providing a position of a predetermined observer (BO) to take into account the head position and/or trajectory of the latter, wherein

- the illuminating device as light unit (SW) has a plurality of headlights and the headlights are controlled during the pixel-wise control of the illuminating device so that the predefinable light pattern is produced on the projection surface, and wherein
- the illuminating device has a left headlight (SWL) and a right headlight (SWR) from the plurality of headlights, which can be used for projecting the predeterminable light pattern, wherein the left headlight (SWL) and the right headlight (SWR) respectively generate the predefinable light pattern from different positions, for which corresponding control signals are determined for the left headlight (SWL) and the right headlight (SWR).

7. Vehicle with an illuminating device according to claim 6.

**Revendications**

1. Procédé de projection d'un dessin lumineux pouvant être prescrit au moyen d'un dispositif d'éclairage d'un véhicule (FZ) dans un environnement du véhicule par

- détermination d'une surface de projection (PE) dans l'environnement du véhicule (FZ) pour une perspective d'un observateur prédéterminé (BO),
- détermination ou fourniture d'une position de l'observateur prédéterminé (BO) pour la perspective,
- commande pixel par pixel d'une unité lumineuse (SW) du dispositif d'éclairage en fonction de la surface de projection déterminée (PE) et de la position déterminée de l'observateur prédéterminé (BO) afin de produire le dessin lumineux pouvant être prescrit, dans lequel

• lors de la détermination de la surface de projection (PE), un changement de position du véhicule (FZ) ou d'un objet (OB) dans l'environnement du véhicule est pris en compte, ou
• lors de la détermination ou de la fourniture d'une position d'un observateur prédéterminé (BO), la trajectoire de celui-ci est prise en compte, et dans lequel

- le dispositif d'éclairage présente en tant qu'unité lumineuse (SW) plusieurs projecteurs et, lors de la commande pixel par pixel du dispositif d'éclairage, les projecteurs sont commandés de telle sorte que le dessin lumineux pouvant être prescrit se forme sur la surface de projection, dans lequel
- pour la projection du dessin lumineux, un projecteur gauche (SWL) et un projecteur droit (SWR) parmi les multiples projecteurs sont utilisés, dans lequel le projecteur gauche (SWL) et le projecteur droit (SWR) produisent chacun à partir de positions différentes le dessin lumineux pouvant être prescrit, ce pour quoi des signaux de commande correspondants sont déterminés pour le projecteur gauche (SWL) et le projecteur droit (SWR).

2. Procédé selon la revendication 1, dans lequel l'observateur prédéterminé (BO) est un conducteur ou passager du véhicule ou un passant au niveau d'une position prédéterminée à l'extérieur du véhicule (FZ) ou une personne dans un véhicule passant devant.

3. Procédé selon l'une quelconque des revendications précédentes, dans lequel, lors de la détermination de la surface de projection (PE), une topographie (Ts) devant le véhicule est analysée.

4. Procédé selon l'une quelconque des revendications précédentes, dans lequel, lors de la commande pixel par pixel de l'unité lumineuse (SW) du dispositif d'éclairage, une propriété de l'environnement est prise en compte.

5. Procédé selon l'une quelconque des revendications précédentes, dans lequel, lors de la commande pixel par pixel de l'unité lumineuse (SW) du dispositif d'éclairage, un véhicule roulant devant ou venant en face, des données de véhicule actuelles, une information du conducteur ou concernant le conducteur ou une distance du dessin lumineux au véhicule (FZ) est pris en compte.

6. Dispositif d'éclairage pour un véhicule (FZ) avec

- une unité lumineuse (SW),
- un dispositif de calcul pour déterminer une surface de projection (PE) dans l'environnement du véhicule (FZ) pour une perspective d'un observateur prédéterminé (BO) et pour déterminer ou fournir une position de l'observateur prédéterminé (BO) pour la perspective et
- un dispositif de commande pour commander pixel par pixel l'unité lumineuse (SW) en fonction de la surface de projection déterminée (PE) et de la position déterminée de l'observateur prédéterminé (BO) afin de produire le dessin lumineux pouvant être prescrit, dans lequel
- le dispositif de calcul est conçu pour

• lors de la détermination de la surface de projection (PE), prendre en compte un changement de position du véhicule (FZ) ou d'un objet (OB) dans l'environnement du véhicule, ou
• lors de la détermination ou de la fourniture d'une position d'un observateur prédéterminé (BO), prendre en compte la position de la tête de celui-ci et/ou la trajectoire de celui-ci, et dans lequel

- le dispositif d'éclairage présente en tant qu'unité lumineuse (SW) plusieurs projecteurs et, lors de la commande pixel par pixel du dispositif d'éclairage, les projecteurs sont commandés de telle sorte que le dessin lumineux pouvant être prescrit se forme sur la surface de projection, dans lequel
- le dispositif d'éclairage présente un projecteur gauche (SWL) et un projecteur droit (SWR) parmi les multiples projecteurs qui peuvent être utilisés pour la projection du dessin lumineux pouvant être prescrit, dans lequel le projecteur gauche (SWL) et le projecteur droit (SWR) produisent chacun à partir de positions différentes le dessin lumineux pouvant être prescrit, ce pour quoi des signaux de commande correspondants sont déterminés pour le projecteur gauche (SWL) et le projecteur droit (SWR).

7. Véhicule avec un dispositif d'éclairage selon la revendication 6.

Fig.1

Fig.2

Fig.3

**S1** $F,T_S,E$

**S2** Projizieren erwünscht?
nein / ja

**S3** $v_f,L_f,S_s,R_s,L_s,v_s$

**S4** Projizieren möglich?
nein / ja

**S5** Projizieren noch erwünscht?
nein / ja

**S6** Aus $T_s,E,F,...$ extrahieren der Beobachter- und der Projektionsflächen-Parameter

**S7** Projektionsebene gleich Bildebene
nein / ja

**S8** Verfahren 1

**S9** Verfahren 2

Fig.4

Fig.5

Fig.6

Fig.7

Fig.8

SWR

SWL

Grad

Grad

Fig.9

Fig.10

Mit $L_f, S_s, R_s, L_s, T_s,$
2D Projektion,
$X_{s1}, Y_{s1}, Z_{s1}, ..., S_1, ...$ — S10

S11

ja ⟵ Überlappende Bereiche ⟶ nein

Vorverarbeitung — S13

S12

nein ⟵ $v_f$ oder $v_s$ klein $\wedge T_s$ sehr komplitziert ⟶ ja

S15 — Kriterium? zb Homogenität

S16 — Intensität pro Pixel

S13 — Render/ Inverse Raytracing

S17 — Verfahren 1 oder 2

Bild Sequenz pro Scheinwerfer — S14

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150163470 A1
- EP 1916153 A2
- DE 102006050548 A1
- DE 102014000935 A1
- WO 2015118890 A
- WO 2014167394 A1
- WO 2015022115 A1